# DEMANDE DE BREVET EUROPEEN

(11) **EP 0 572 745 A1**
(43) Date de publication de la demande: **08.12.1993**
(21) Numéro de dépôt: 92420193.2
(22) Date de dépôt: 05.06.1992
(51) Int. Cl.: A23B 7/05, A23B 7/08, A23B 7/04

(54) **Procédé pour la conservation par cryogénation de morceaux de melon frais et produit obtenu**

(71) Demandeur: Freyssin, Alain, F-26400 Crest (FR)
(72) Inventeur: Freyssin, Alain, F-26400 Crest (FR)
(74) Mandataire: Laurent, Michel

(57) **Abrégé**

Procédé pour la conservation par cryogénation de melon, dans lequel on surgèle des morceaux de melon frais que l'on stocke ensuite à basse température, caractérisé en ce qu'il consiste :
. tout d'abord, à une température inférieure à 0°C, à enrober ces morceaux congelés d'un sirop ;
. puis, à conditionner ces morceaux congelés enrobés dans un récipient contenant un sirop refroidi ;
. puis, à surgeler ce récipient rempli ;
. et enfin, à stocker en chambre froide ces récipients remplis surgelés.

## Description

L'invention concerne un nouveau procédé pour la conservation par cryogénation de morceaux de melon frais ; elle se rapporte également aux morceaux ainsi conditionnés.

Il est bien connu de conserver des fruits par cryogénation, notamment en les surgelant. Si cette technique est utilisée avec succès pour la conservation des baies, en revanche, jusqu'à ce jour, on ne sait pas conserver valablement du melon, sinon sous forme confite, donc trop sucrée. En effet, compte tenu du volume, il n'est pas possible de surgeler valablement du melon. On a proposé de surgeler des morceaux de melon. Malheureusement, lors de la décongélation, ces morceaux s'affaissent, perdent ainsi de leur pouvoir attractif, et leurs qualités gustatives sont fortement altérées.

L'invention pallie ces inconvénients. Elle vise un procédé de conservation du melon sous forme surgelée, mais qui, après décongélation, conserve à ce produit toutes ses qualités gustatives et organo-leptiques initiales, tout en lui conservant sa forme initiale en morceaux, ce qui ainsi le rend attractif pour le consommateur qui trouve alors, hors saison, des produits lui rappelant parfaitement l'allure et le goût des melons frais.

Ce procédé pour la conservation par cryogénation du melon, dans lequel on surgèle des morceaux de melon frais que l'on stocke ensuite à basse température, se caractérise en ce qu'il consiste :
. tout d'abord, à une température inférieure à 0°C, à enrober ces morceaux congelés d'un sirop ;
. puis, à conditionner ces morceaux congelés enrobés de sirop refroidi dans un récipient ;
. puis, à surgeler ce récipient rempli ;
. et enfin, à stocker en chambre froide les récipients remplis surgelés.

En d'autres termes, l'invention consiste, après avoir découpé le melon en morceaux et avoir surgelé et stocké ces morceaux dans des conditions habituelles, à enrober à une température inférieure à 0°C, ces morceaux d'un sirop, puis à conditionner ces morceaux enrobés dans un récipient où l'on ajoute également du même sirop, puis à surgeler le tout que l'on stocke en chambre froide dans des conditions habituelles. Ainsi, après décongélation dans des conditions habituelles, les morceaux de melon enrobés de sirop, conserveront leur forme initiale, toutes leurs qualités gustatives et présenteront une brillance accentuée par le surfaçage du sirop. Ainsi, le consommateur retrouvera un produit prêt à la consommation, dont la consistance, la forme et le goût seront sensiblement en tous points identiques à celui du melon frais.

Avantageusement, en pratique :
- les morceaux de melon sont découpés en forme de billes et sont surgelés sur des claies ; en pratique, ces billes ont un diamètre voisin de vingt millimètres et sont surgelées à une température d'au moins -45°C pendant au moins vingt minutes, puis stockées de manière connue en chambre froide à une température voisine de -22°C ;
- le sirop caractéristique est un mélange d'eau et de sucre contenant de 20 à 30 % en poids de sucre, de préférence entre 22 et 25 % ; en effet, on a observé que si la teneur en sucre était inférieure à 20 %, les qualités du melon étaient affectées, alors que si ce pourcentage excéde 30 %, le sirop devient trop pâteux et le goût trop sucré ;
- comme sucre, on peut faire appel à des sucres les plus variés, d'usage courant en pâtisserie, tels que glucose, saccharose ;
- le sirop est refroidi à une température inférieure à 0°C, et déposé par toute technique appropriée sur les billes congelées, notamment par trempage ;
- les billes congelées enrobées de sirop sont ensuite déposées dans un récipient de qualité alimentaire, dans lequel on ajoute également une certaine quantité du même sirop refroidi ; avantageusement, la quantité de sirop dans le récipient représente la moitié en poids de celui des billes ;
- le récipient rempli, puis operculé, est ensuite surgelé à une température d'au moins -45°C pendant dix minutes au moins, puis est stocké de manière classique en chambre froide à -22°C, puis est enfin décongelé le moment venu de manière habituelle, pour être consommé ;
- le sirop peut contenir des adjuvants destinés à donner du goût, tel que de la vanille, du caramel, etc..

La manière dont l'invention peut être réalisée et les avantages qui en découlent, ressortiront mieux de l'exemple de réalisation qui suit.

De manière connue, dans des melons peu chargés en eau, de préférence cultivés sur butes, on découpe au boulier des billes de vingt millimètres de diamètre environ. On place ensuite ces billes sur des clayettes ou des grilles métalliques d'ouverture appropriée, et on surgèle à -45°C pendant vingt minutes. On stocke ensuite de manière connue en chambre froide à -22°C.

La forme de bille facilite les opérations de surgélation et de congélation en évitant l'adhésion aux clayettes, tout en donnant au produit une bonne valorisation esthétique.

Parallèlement, on prépare de manière classique un sirop en versant du sucre alimentaire dans de l'eau tiède (35 à 45°C) sous légère agitation, en ajustant la concentration entre 20 et 25 % en poids de sucre. On refroidit ensuite ce sirop pour l'amener à une température inférieure à 0°C, tout en le conservant à l'état liquide.

Parallèlement, on retire les billes congelées que l'on trempe dans le sirop refroidi, et que l'on place ensuite dans des récipients de contenance et de forme appropriée répondant aux exigences alimentaires. Le fait d'opérer à une température inférieure à 0°C évite de décongeler les billes en surface, lors du trempage. On complète ensuite le volume du récipient en ajoutant le même sirop, de sorte que la proportion de l'ensemble soit environ moitié de ce sirop, moitié billes congelées. On constate tout de suite que chaque bille élémentaire est enrobée de sirop. On opercule le récipient que l'on surgèle ensuite dans des conditions habituelles (-45°C), mais pendant dix minutes seulement. On obtient alors des billes ayant une coloration légèrement plus claire que celles du melon de base, et ayant une faible densité apparente. On stocke alors ces billes enrobées en chambre froide à -22°C.

Le fait de tremper des billes surgelées par du sirop évite le tassement des billes dans le récipient, ce qui leur permet, après décongélation, de retrouver une apparence non déformée et une chair non affectée, ce qui est nouveau, recherché et non réalisé jusqu'alors.

Dans une variante, on place les billes dans le récipient avant trempage, et l'on verse le sirop par dessus ces billes, assurant ainsi directement la phase de trempage.

Les récipients operculés et congelés sont stockés et transportés de manière connue.

Lors de l'emploi, le consommateur laisse décongeler le produit de manière habituelle, enlève l'opercule. On observe alors dans le récipient, des billes brillantes, fermes, fort attractives, beignant dans un sirop. Ces billes décongelées présentent pratiquement toutes les qualités gustatives ainsi que la texture et la coloration du melon frais initial.

La surgélation et la congélation peuvent être effectuées par toute technique connue, tel que tunnel, de manière à obtenir une congélation homogène à coeur.

Si dans l'exemple de réalisation décrit, on utilise la présentation sous forme de billes, il va de soi que d'autres formes de présentation peuvent être proposées, telles que cubes, tranches.

Le procédé selon l'invention présente de nombreux avantages par rapport aux techniques connues et exploitées à ce jour. On peut citer :
- une conservation de la forme, de la texture, de la brillance et des propriétés gustatives du melon frais, ce que l'on ne savait pas obtenir jusqu'alors ;
- une stabilité du produit à l'air, qui ne s'oxyde pas ou ne brunit pas rapidement ;
- la possibilité de parfumer le sirop d'enrobage, par exemple avec de la vanille ou du caramel, ce qui donne à l'ensemble un goût complémentaire parfois recherché ;
- la possibilité d'être réalisé avec du matériel classique ;
- la possibilité d'opérer en continu.

## Revendications

1. Procédé pour la conservation par cryogénation de melon, dans lequel on surgèle des morceaux de melon frais que l'on stocke ensuite à basse température, caractérisé en ce qu'il consiste :
. tout d'abord, à une température inférieure à 0°C, à enrober ces morceaux congelés d'un sirop ;
. puis, à conditionner ces morceaux congelés enrobés dans un récipient contenant un sirop refroidi ;
. puis, à surgeler ce récipient rempli ;
. et enfin, à stocker en chambre froide ces récipients remplis surgelés.

2. Procédé selon la revendication 1, caractérisé en ce que les morceaux de melon ont une forme de bille et sont surgelés sur des claies.

3. Procédé selon la revendication 1, caractérisé en ce que les billes ont un diamètre voision de vingt millimètres, et sont surgelées à au moins -45°C pendant au moins vingt minutes, puis stockées à -22°C.

4. Procédé selon l'une des revendications 1 à 3, caractérisé en ce que le sirop est un mélange d'eau et de sucre, contenant de 20 à 30 % en poids de sucre, et de préférence de 22 à 25 %.

5. Procédé selon la revendication 4, caractérisé en ce que le sirop est refroidi en dessous de 0°C avant d'être déposé par trempage sur les billes congelées.

6. Procédé selon l'une des revendications 1 à 5, caractérisé en ce que le récipient contient pour moitié en poids de sirop et moitié en poids de billes congelées.

7. Procédé selon la revendication 6, caractérisé en ce que le récipient rempli, puis operculé, est surgelé à -45°C pendant dix minutes, puis est à nouveau stocké en chambre froide à -22°C, puis est décongelé pour être consommé.

8. Procédé selon la revendication 4, caractérisé en ce que le sirop contient également un parfum choisi dans le groupe comprenant la vanille et le caramel.

9. Morceaux de melon congelés, caractérisés en ce qu'ils sont enrobés d'un sirop.
